# EUROPEAN PATENT APPLICATION

(11) **EP 2 012 048 A2**
(43) Date of publication of application: **07.01.2009**
(21) Application number: 08010068.8
(22) Date of filing: 02.06.2008
(51) Int. Cl.: F16H 61/662

(54) **Automatic transmission hydraulic pressure control apparatus**

(30) Priority: 06.07.2007 JP 2007178361
(71) Applicant: JATCO Ltd, Fuji-shi, Shizuoka 417-8585 (JP)
(72) Inventor: Kawahigashi, Hideto, Fuji-shi Shizuoka 417-8585 (JP); Chinju, Hirofumi, Fuji-shi Shizuoka 417-8585 (JP); Mori, Yasushi, Fuji-shi Shizuoka 417-8585 (JP); Oota, Yoshikazu, Atsugi-shi Kanagawa 243-0123 (JP); Nihei, Hironori, Atsugi-shi Kanagawa 243-0123 (JP)
(74) Representative: Schaeberle, Steffen

(57) **Abstract**

An automatic transmission hydraulic pressure control apparatus decreases a hydraulic pressure lower limit value as much as possible without causing a non-operating zone of a solenoid valve to be included in a control region of the solenoid valve due to product variation. First and second determinations are alternately performed to determine if a solenoid command value is in a non-operating zone by alternately changing the solenoid command value to decrease and increase the actual hydraulic pressure in a step-like manner. The solenoid command value of an immediately previous cycle in which the first determining section determined that the solenoid command value was not in the non-operating zone is set as a solenoid command limit value when one of the first and second determining sections has determined that the solenoid command value is in the non-operating zone.

## Description

### CROSS-REFERENCE TO RELATED APPLICATIONS

This application claims priority to Japanese Patent Application No. 2007-178361, filed on July 6, 2007. The entire disclosure of Japanese Patent Application No. 2007-178361 is hereby incorporated herein by reference.

### BACKGROUND OF THE INVENTION

### Field of the Invention

The present invention generally relates to a hydraulic pressure control apparatus for an automatic transmission that detects a non-operating zone of a solenoid valve.

### Background Information

In automatic transmission, a solenoid valve is sometimes used for controlling hydraulic pressure in the automatic transmission. More specifically, such an arrangement usually involves sending a command current corresponding to a target hydraulic pressure to a solenoid valve such that an output pressure regulated by the solenoid valve is adjusted to the target hydraulic pressure. One example of such an automatic transmission is disclosed in Japanese Laid-Open Patent Publication No. 6-207662. In the automatic transmission discloses in this publication, a hydraulic pressure control configuration is provided in which a primary pressure and a secondary pressure of a belt-type continuously variable transmission are controlled based on a control pressure supplied from a solenoid valve. The solenoid valve changes in response to a command current value, but the solenoid valve has non-operating zones in the vicinity of an upper limit value and in the vicinity of a lower limit value. If these non-operating zones are included in the control region, then the actual hydraulic pressure will not change in response to the command current value sent to the solenoid valve when the command current value is in the vicinity of either of the non-operating zones. Consequently, the control unit will need to execute extra operations and/or the control will become unstable.

A known method of excluding the non-operating zones from the control region is to preset upper and lower limit values for the command current value sent to the solenoid valve. However, since non-operating zone varies from product to product, the preset upper and lower limit values are set with a sufficient margin so as not to include the non-operating zone in the control region regardless of what the non-operating zone is for any particular product.

In view of the above, it will be apparent to those skilled in the art from this disclosure that there exists a need for an improved hydraulic pressure control apparatus. This invention addresses this need in the art as well as other needs, which will become apparent to those skilled in the art from this disclosure.

### SUMMARY OF THE INVENTION

It has been discovered that when the upper and lower limit values are set in view of the variation among products, there are times when the margin used with respect to the variation of the solenoid valves is excessive and the lower limit value of the hydraulic pressure is set to a higher value than is necessary. As the hydraulic pressure becomes higher, the pump load becomes higher. Fuel economy (fuel efficiency) is degraded when the pump load becomes higher. Consequently, the fuel economy is degraded when the hydraulic pressure value is higher than necessary.

In view of the above-mentioned issues, one object of the present invention is to decrease a hydraulic pressure lower limit value as much as possible without causing a non-operating zone of a solenoid valve to be included in a control region of the solenoid valve due to product variation.

In order to achieve the aforementioned object and other potential objects, an automatic transmission hydraulic pressure control apparatus is provided that basically comprises a first determining section, a second determining section and a limit value setting section. The first determining section is configured to execute a first determination of whether a solenoid command value for a solenoid valve of a hydraulic circuit of an automatic transmission is in a non-operating zone of the solenoid valve after changing the solenoid command value by a first prescribed value in a step-like manner in a direction corresponding to a decrease in an actual hydraulic pressure of the hydraulic circuit. The first determination is based on a tracking characteristic of the actual hydraulic pressure versus the solenoid command value during a first prescribed amount of time. The second determining section is configured to execute a second determination of whether the solenoid command value is in the non-operating zone after changing the solenoid command value by a second prescribed value in a step-like manner in a direction corresponding to an increase in the actual hydraulic pressure, the second prescribed value being smaller than the first prescribed value. The second determination is based on a response characteristic of the actual hydraulic pressure versus the solenoid command value during a second prescribed amount of time. The limit value setting section is configured to alternately control execution of the first and second determining sections and to set the solenoid command value of an immediately previous cycle in which the first determining section determined that the solenoid command value was not in the non-operating zone as a solenoid command limit value when one of the first and second determining sections has determined that the solenoid command value is in the non-operating zone.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:

Figure 1 is a schematic view of an automatic transmission with an automatic transmission hydraulic pressure control apparatus in accordance with one embodiment;

Figure 2 is a characteristic diagram plotting the hydraulic pressure versus the solenoid command current value;

Figure 3 is a flowchart showing a control process executed by the hydraulic pressure control apparatus to perform a start condition and an abort condition for the non-operating zone learning control;

Figure 4 is a flowchart showing a control process executed by the hydraulic pressure control apparatus to perform the non-operating zone learning control;

Figures 5 is a time chart showing how the solenoid command value and the actual hydraulic pressure change during the non-operating zone learning control; and

Figures 6 is a time chart showing how the solenoid command value and the actual hydraulic pressure change during the non-operating zone learning control.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

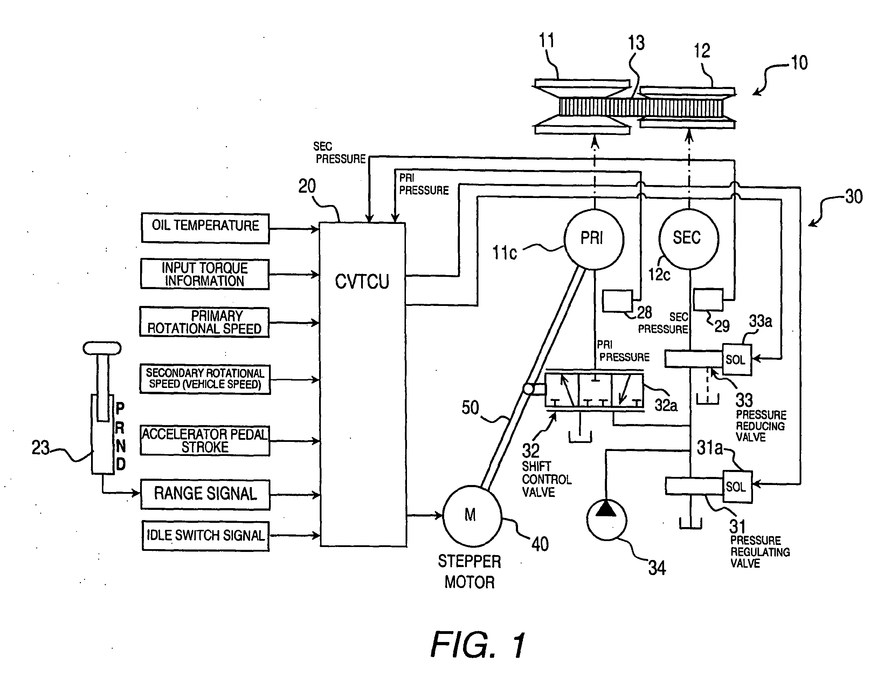

Referring initially to Figure 1, an automatic transmission is illustrated that is equipped with an automatic transmission hydraulic pressure control apparatus in accordance with one embodiment. In this embodiment, the automatic transmission is assumed to be a belt-type continuously variable transmission as an example. The belt-type continuously variable transmission 10 basically includes a primary pulley 11 and a secondary pulley 12 on which a V belt 13 is mounted. The V belt 13 winds around the primary pulley 11 and the secondary pulley 12 to transmit rotation of the primary pulley 11 to the secondary pulley 12. Each of the primary pulley 11 and the secondary pulley 12 has a groove width that can be varied in response to a hydraulic pressure supplied to the respective one of the pulley 11 or 12. The gear ratio is changed by varying these groove widths.

A CVT control unit 20 (hereinafter called "CVTCU") is provided to control the hydraulic pressures being supplied to the primary pulley 11 and the secondary pulley 12 from a hydraulic pressure regulation circuit 30. The CVTCU 20 preferably includes a microcomputer with a hydraulic pressure control program that controls the hydraulic pressure in the hydraulic pressure regulation circuit 30 as discussed below. The CVTCU 20 also includes other conventional components such as an input interface circuit, an output interface circuit, and storage devices such as a ROM (Read Only Memory) device and a RAM (Random Access Memory) device as needed and/or desires. It will be apparent to those skilled in the art from this disclosure that the precise structure and algorithms for the CVTCU 20 can be any combination of hardware and software that will carry out the functions of the CVTCU 20 as discussed herein.

The hydraulic pressure regulation circuit 30 basically includes a regulator valve 31, a shift control valve 32 and a pressure reducing valve 33. The hydraulic pressure regulation circuit 30 serves to regulate the supply of hydraulic pressure from a hydraulic pressure pump 34 to the primary pulley 11 and the secondary pulley 12.

The regulator valve 31 is a solenoid valve having a solenoid 31a, which is controlled by a command (e.g., a duty signal) from the CVTCU 20 for changing the operating state of the valve. Thus, the regulator valve 31 serves to adjust the pressure of hydraulic oil pumped from the hydraulic pressure pump 34 to a prescribed line pressure in accordance with a driving condition in response to the command from the CVTCU 20.

The shift control valve 32 serves to control the hydraulic pressure supplied to the primary pulley 11 (hereinafter called the "primary pressure") to a desired target pressure. The shift control valve 32 is connected to a servo link 50 that constitutes a mechanical feedback mechanism. One end of the servo link 50 is connected to a stepper motor 40 and the other end of the servo link 50 is connected to a movable conical plate of the primary pulley 11. The shift control valve 32 is driven by the stepper motor 40 via the servo link 50 and receives feedback of the groove width, i.e., the actual gear ratio, from the movable conical plate of the primary pulley 11. The shift control valve 32 has a spool 32a whose displacement controls the intake and discharge of hydraulic pressure to and from a primary pulley cylinder chamber 11c. The position of the spool 32a is controlled by the drive position of the stepper motor 40 so as to adjust the primary pressure and achieve the commanded target gear ratio. When the shift operation actually ends, the displacement from the servo link 50 is received and the spool 32a is held in a valve closed position.

The pressure reducing valve 33 is a solenoid valve that is provided with a solenoid 33a. The pressure reducing valve 33 serves to control the hydraulic pressure supplied to a secondary pulley cylinder chamber 12c (hereinafter called the "secondary pressure") to a described target pressure.

The hydraulic pressure supplied from the hydraulic pressure pump 34 is adjusted to a line pressure by the regulator valve 31 and the line pressure is supplied to the shift control valve 32 and the pressure reducing valve 33.

The gear ratio of the primary pulley 11 and the secondary pulley 12 is controlled by the stepper motor 40 in response to a shift command signal from the CVTCU 20. More specifically, the servo link 50 is moved by the stepper motor 40 and the spool 32a of the shift control valve 32 is driven in accordance with the displacement of the servo link 50. The line pressure supplied to the shift control valve 32 is adjusted according to the position of the spool 32a, and the adjusted pressure, i.e., the primary pressure, is supplied to the primary pulley 11. The groove width is variably controlled accordingly and the prescribed gear ratio is set.

The CVTCU 20 receives a range signal from an inhibitor switch 23 and signals from a pair of oil pressure sensors 28 and 29 as seen in Figure 1. Also the CVTCU 20 receives signals from a plurality of sensors for indicating an accelerator pedal stroke, an oil temperature, a rotational speed of the primary pulley 11, a rotational speed of the secondary pulley 12, and input torque information, respectively. Based on these input signals, the CVTCU 20 controls the drive position of the stepper motor 40 and controls the solenoid 31a and 33a of the pressure regulator valve 31 and the pressure reducing valve 33. The oil pressure sensor 28 detects the primary pressure in the primary pulley cylinder chamber 11 c. The oil pressure sensor 29 detects the secondary pressure in the secondary pulley cylinder chamber 12c.

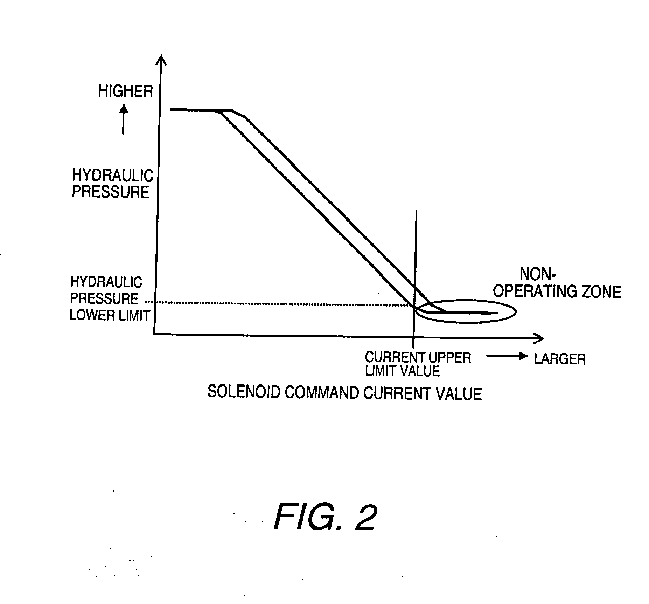

In this embodiment, an automatic transmission hydraulic pressure control apparatus is exemplified by the control of the solenoid 33a of the pressure reducing valve 33 (solenoid valve) executed by the CVTCU 20. Thus, the CVTCU 20 constitutes the automatic transmission hydraulic pressure control apparatus in the illustrated embodiment. The opening degree of the solenoid 33a is changed in accordance with a command current value from the CVTCU 20, thereby changing the secondary pressure. As shown in Figure 2, the solenoid 33a of the pressure reducing valve 33 lowers the secondary pressure as the solenoid command current value is increased. Since the control region may include a non-operating zone of the pressure reducing valve 33 (solenoid valve) if the secondary pressure falls below a hydraulic pressure lower limit value, the command current value is controlled such that the current applied to the solenoid 33a of the pressure reducing valve 33 does not exceed a current upper limit value corresponding to the hydraulic pressure lower limit value. Since the pressure reducing valve 33 (solenoid valve) has a unique non-operating zone (i.e., there are variations among solenoid valves), there is the possibility that the hydraulic pressure lower limit value will be set too high with respect to the non-operating zone if a single (the same) hydraulic pressure lower limit value is used for all solenoid valves. In such a case, since the region below the hydraulic pressure lower limit value cannot be used, there is the possibility that the secondary pressure will be higher than necessary and the fuel economy will be degraded.

Therefore, in this embodiment, a non-operating zone learning control is executed wherewith a hydraulic pressure corresponding to the non-operating zone is detected and the hydraulic pressure lower limit value is set to the lowest possible hydraulic pressure at which the non-operating zone does not affect the control region.

The non-operating zone learning control is a control configured to learn the hydraulic pressure where the non-operating zone of the pressure reducing valve 33 (solenoid valve) exists, thereby enabling the hydraulic pressure to be lowered as much as possible without including the non-operating zone in the control region.

Thus, with the illustrated embodiment, the limit values of the solenoid command value that result in the non-operating zones of the pressure reducing valve 33 (solenoid valve) being excluded from the control region can be accurately detected because a change in the actual hydraulic pressure occurring in response to a change in the solenoid command value can be determined in both the decreasing direction and the increasing direction of the hydraulic pressure by alternately repeating first and second non-operating zone determinations as discussed below in more detail. As a result, the lower limit value of the hydraulic pressure can be lowered as much as possible in spite of the product variation of the pressure reducing valve 33 (solenoid valve) and the fuel economy can be improved.

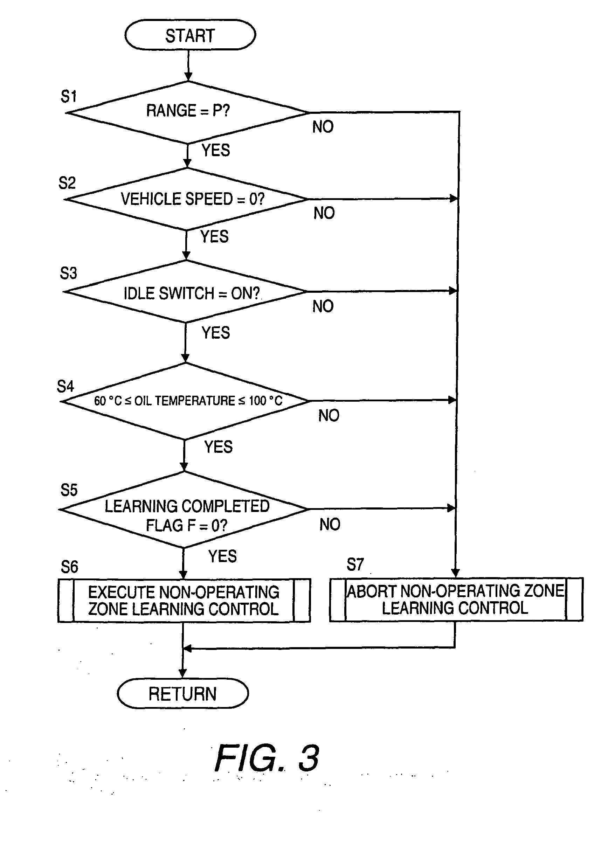

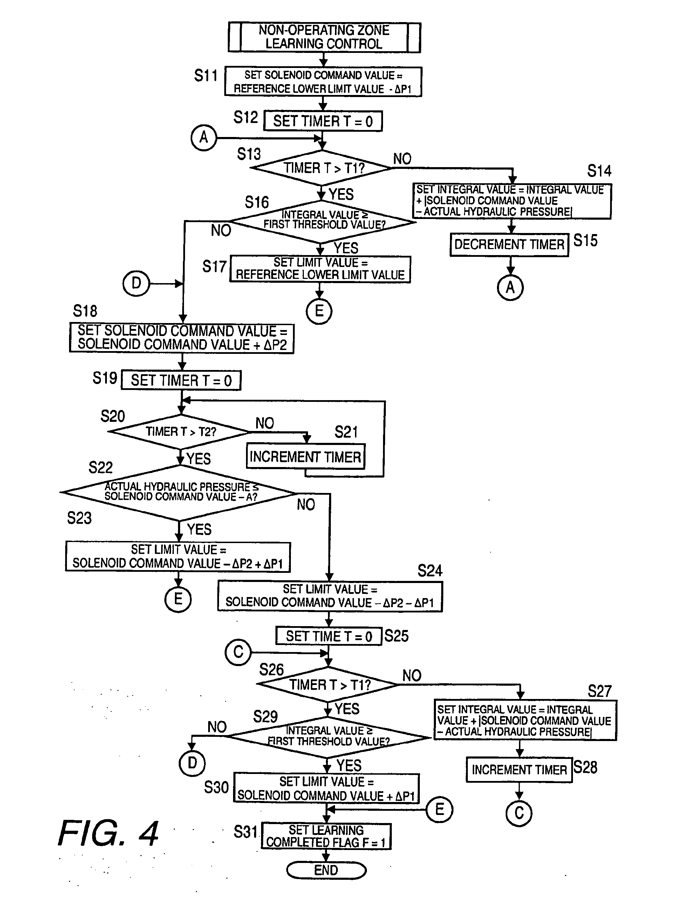

The control executed by the CVTCU 20 will now be explained with reference to the flowcharts of Figures 3 and 4. Figure 3 is a flowchart showing a start condition and an abort condition for the non-operating zone learning control. Figure 4 is a flowchart showing the non-operating zone learning control. The control shown in Figure 3 is executed once per prescribed small amount of time (e.g., every 10 ms).

The start conditions and abort conditions for the non-operating zone learning control will now be explained with reference to Figure 3.

In step S1, the CVTCU 20 determines if the value of the range signal corresponds to P (Park). If the value of the range signal is P (Park), then the CVTCU 20 proceeds to step S2. Otherwise, if the range signal indicates a range other than P (Park), the CVTCU 20 then proceeds to step S7 and aborts the non-operating zone learning control. When the range signal is other than P (Park), the non-operating zone learning control is aborted because torque is being inputted to the transmission 10 from the engine and it is necessary to have a secondary pressure.

In step S2, the CVTCU 20 determines if the vehicle speed is zero. If the vehicle speed is zero, then the CVTCU 20 proceeds to step S3. If the vehicle is traveling at a vehicle speed larger than zero, then the CVTCU 20 proceeds to step S7 and aborts the non-operating zone learning control. When the vehicle speed is not zero, i.e., when the vehicle is moving, the non-operating zone learning control is aborted because there is an input torque from the engine and it is necessary to have a secondary pressure.

In step S3, the CVTCU 20 determines if an idle switch is "on". If the idle switch is "on", then the CVTCU 20 proceeds to step S4. If the idle switch is "off", then the CVTCU 20 proceeds to step S7 and aborts the non-operating zone learning control. The idle switch turns "on" when the vehicle is in an idling state. If the vehicle not idling, then the non-operating zone control is aborted because it is necessary to have a secondary pressure.

In step S4, the CVTCU 20 determines if the oil temperature is equal to or higher than 60°C and lower than or equal to 100°C. The CVTCU 20 proceeds to step S5 if the oil temperature is equal to or higher than 60°C and lower than or equal to 100°C and aborts the non-operating learning control if the oil temperature is below 60°C or above 100°C. When the oil temperature is equal to or higher than 60°C and lower than or equal to 100°C, the secondary pressure can be set to a minimum pressure. Otherwise, the non-operating learning control is aborted.

In step S5, the CVTCU 20 determines if the value of a learning competed flag F is 0. If the value of the learning completed flag F is 0, then the CVTCU 20 proceeds to step S6 and executes the non-operating zone learning control. If the value of the flag F is 1, then the CVTCU 20 proceeds to step S7 and aborts the non-operating zone learning control. The learning completed flag F assumes a value of 1 when the non-operating zone learning control is completed. Even if all of the conditions checked in steps S 1 to S4 are satisfied, the non-operating zone learning control is aborted if the non-operating zone learning control has already been completed.

The non-operating zone learning control itself will now be explained with reference to Figure 4.

In step S11, the CVTCU 20 sets a value obtained by subtracting a prescribed value ΔP1 from a preset reference lower limit value as a solenoid command value. The solenoid command value is a hydraulic pressure corresponding to a command current value to be sent to the solenoid 33a of the pressure reducing valve 33 (solenoid valve). The reference lower limit value is a hydraulic pressure lower limit value set in advance such that the non-operating zone will not be included in the control region of the pressure reducing valve 33 (solenoid valve). The prescribed value ΔP1 is a value suitable for searching for the non-operating zone and is determined in advance by experimentation or the like.

In step S 12, the CVTCU 20 resets a timer T.

In step S13, the CVTCU 20 determines if the value of the timer T is larger than a prescribed amount of time T1. If the value of the timer T is larger than the prescribed amount of time T1, then the CVTCU 20 proceeds to step S16. If the value of the timer T is equal to or smaller than the prescribed amount of time T1, then the CVTCU 20 proceeds to step S 14, where it adds the absolute value of a value obtained by subtracting an actual hydraulic pressure from the solenoid command value to an integral value and sets the result as a new value of the integral value. In other words, the CVTCU 20 integrates the difference between the solenoid command value and the actual hydraulic pressure. The actual hydraulic pressure is a hydraulic pressure that actually exists at the downstream side of the pressure reducing valve 33 (solenoid valve).

In step S 15, the CVTCU 20 increments the timer and returns to step S 13.

If it determines in step S 13 that the value of the timer T is larger than the prescribed amount of time T1, then the CVTCU 20 proceeds to step S16 (first determining section) and determines if the integral value is equal to or larger than a first threshold value. The CVTCU 20 then proceeds to step S 17 if the integral value is equal to or larger than the first threshold value or to step S 18 if the integral value is smaller than the first threshold value.

In step S 17 (limit value setting section), the CVTCU 20 sets the reference lower limit value as a limit value. The CVTCU 20 then proceeds to step S31 and sets the value of the learning completed flag F to 1. The limit value is a lower limit value of the hydraulic pressure of the pressure reducing valve 33 (solenoid valve) that has been learned in consideration of the non-operating zone.

Meanwhile, if the CVTCU 20 determines in step S16 that the integral value is smaller than the first threshold value, then the CVTCU 20 proceeds to step S 18 and sets the solenoid command value to a value obtained by adding a prescribed value ΔP2 (second prescribed value) to the solenoid command value. The prescribed value ΔP2 is a value suitable for searching for the non-operating zone and is determined in advance by experimentation or the like.

In step S 19, the CVTCU 20 resets a timer T.

In step S20, the CVTCU 20 determines if the value of the timer T is larger than a prescribed amount of time T2. If the value of the timer T is larger than the prescribed amount of time T2, then the CVTCU 20 proceeds to step S22. If the value of the timer T is equal to or smaller than the prescribed amount of time T2, then the CVTCU 20 proceeds to step S21 and increments the timer before returning to step S20.

In step S22 (second determining section), the CVTCU 20 determines if the actual hydraulic pressure is equal to or smaller than a value obtained by subtracting a prescribed value α from the solenoid command value. If the actual hydraulic pressure is equal to or smaller than the value obtained by subtracting the prescribed value α from the solenoid command value, then the CVTCU 20 proceeds to step S23 (limit value setting section) and sets the limit value to a value obtained by subtracting the prescribed value ΔP2 from and adding the prescribed value ΔP1 to the solenoid command value. The CVTCU 20 then proceeds to step S31 and sets the learning completed flag F to 1. Meanwhile, if the actual hydraulic pressure is equal to or smaller than the value obtained by subtracting the prescribed value α from the solenoid command value, then the CVTCU 20 proceeds to step S24.

In step S24, sets the value obtained by subtracting the sum ΔP1 + ΔP2 (first prescribed value) from the solenoid command value as a new solenoid command value.

In step S25, the CVTCU 20 resets a timer T.

In step S26, the CVTCU 26 determines if the timer T is larger than the prescribed amount of time T1. If the value of the timer T is larger than the prescribed amount of time T1, then the CVTCU 20 proceeds to step S29. If the value of the timer T is equal to or smaller than the prescribed amount of time T1, then the CVTCU 20 proceeds to step S27, where it adds the absolute value of a value obtained by subtracting the actual hydraulic pressure from the solenoid command value to the integral value and sets the result as a new value of the integral value. In other words, the CVTCU 20 integrates the difference between the solenoid command value and the actual hydraulic pressure.

In step S28, the CVTCU 20 increments the timer and returns to step S26.

If the CVTCU 20 determines in step S26 that the value of the timer T is larger than the prescribed amount of time T1, then the CVTCU 20 proceeds to step S29 (first determining section) and determines if the integral value is equal to or larger than a first threshold value. The CVTCU 20 then proceeds to step S30 if the integral value is equal to or larger than the first threshold value or to step S18 if the integral value is smaller than the first threshold value.

In step S30 (limit value setting section), the CVTCU 20 sets the limit value to a value obtained by adding the prescribed value ΔP1 to the solenoid command value.

In step S31, the CVTCU 20 sets the value of the learning completed flag F to 1 and ends the control sequence.

If the limit value is to be set under conditions in which both the determination made by the first determining section and the determination made by the second determining section are affirmative in succession, then the control sequence is provided with a separate successive determination flag and contrived such that if the results of both step S29 (S16) and step S22 are "Yes" and the successive determination flag has not been set, then the CVTCU 20 sets the successive determination flag and proceeds along the flow sequence that would occur if the results of these steps were "No" without immediately setting the limit value. Meanwhile, if the successive determination flag has already been set, then the CVTCU 20 sets the limit value to the command value that was in effect in an immediately previous cycle when the first determining section determined that the command value was not in the non-operating zone.

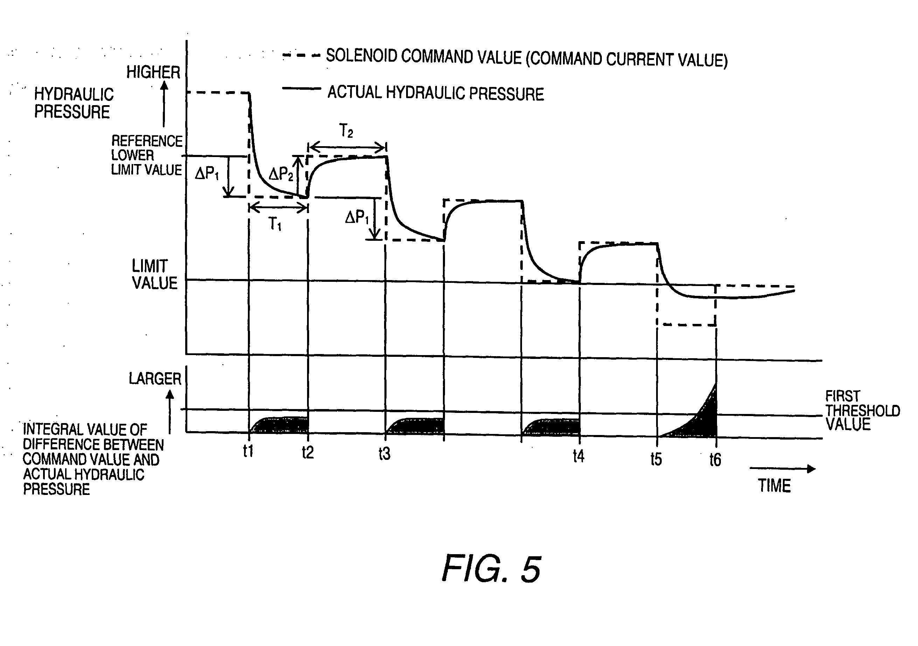

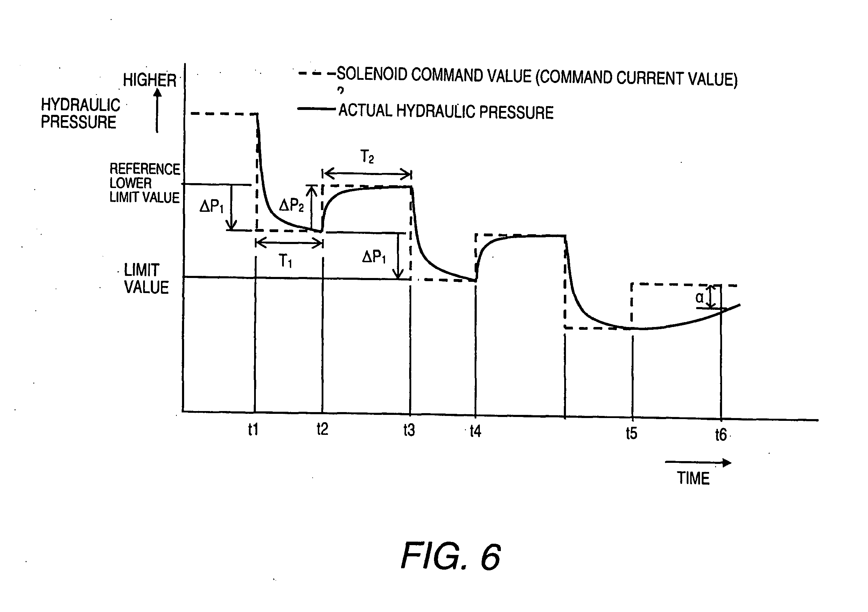

The operational effects of the embodiment will now be explained with reference to Figures 5 and 6. Figures 5 and 6 are time charts showing how the solenoid command value and the actual hydraulic pressure change during the non-operating zone learning control. Figure 5 illustrates a case in which the tracking performance of the actual hydraulic pressure with respect to the solenoid command value is low (result of step S29 is "Yes") when the hydraulic pressure is increased in a step-like manner. Figure 6 illustrates a case in which the response of the actual hydraulic pressure with respect to the solenoid command value is low (result of step S22 is "Yes") when the hydraulic pressure is decreased in a step-like manner.

The operational effects of the non-operating zone learning control will first be explained with reference to Figure 5. At a time t1, the solenoid command value is decreased from the reference lower limit value by the amount of the prescribed value ΔP1. The difference between the solenoid command value and the actual hydraulic pressure is then integrated until the prescribed amount of time T1 elapses.

At a time t2, the prescribed amount of time T1 elapses (ends) and it is determined that the tracking performance of the actual hydraulic pressure is high because the calculated integral value is smaller than the first threshold value. The solenoid command value is increased by the prescribed value ΔP2.

At a time t3, the prescribed amount of time T2 elapses and it is determined that the response of the actual hydraulic pressure is high because the value obtained by subtracting the prescribed value α from the solenoid command value is smaller than the actual hydraulic pressure. The solenoid command value is decreased by the amounts of the prescribed value ΔP2 and the prescribed value ΔP1 and the same control is repeated.

At a time t5, the solenoid command value is decreased by the prescribed value ΔP1. Then, at a time t6 occurring when the prescribed amount of time T1 has elapsed since the time t5, it is determined that the tracking performance of the actual hydraulic pressure with respect to the solenoid command value is low because the integral value is larger than the first threshold value. The solenoid command value corresponding to the time t4 (before the solenoid command value was decreased by the prescribed value ΔP1) is set as the limit value, i.e., the lower limit value of the hydraulic pressure.

The operational effects of the non-operating zone learning control will now be explained with reference to Figure 6. Similarly to Figure 5, at a time t1, the solenoid command value is decreased from the reference lower limit value by the amount of the prescribed value ΔP1. The difference between the solenoid command value and the actual hydraulic pressure is then integrated until the prescribed amount of time T1 elapses.

At a time t2, the prescribed amount of time T1 elapses (ends) and it is determined that the tracking performance of the actual hydraulic pressure is high because the calculated integral value is smaller than the first threshold value. The solenoid command value is increased by the prescribed value ΔP2.

At a time t3, the prescribed amount of time T2 elapses and it is determined that the response of the actual hydraulic pressure is high because the value obtained by subtracting the prescribed value α from the solenoid command value is smaller than the actual hydraulic pressure. The solenoid command value is decreased by the amounts of the prescribed value ΔP2 and the prescribed value ΔP1 and the same control is repeated.

At a time t5, the solenoid command value is decreased by the prescribed value ΔP2. Then, at a time t6 occurring when the prescribed amount of time T2 has elapsed since the time t5, it is determined that the response of the actual hydraulic pressure with respect to the solenoid command value is low because the value obtained by subtracting the prescribed value α from the solenoid command value is larger than the actual hydraulic pressure. The solenoid command value corresponding to the time t4 (before the solenoid command value was decreased by the prescribed value ΔP1) is set as the limit value, i.e., the lower limit value of the hydraulic pressure.

As explained above, the embodiment is configured to search for the non-operating zone by repeatedly executing the first determining section and the second determining section, i.e., by decreasing and increasing the solenoid command value and determining the tracking performance and response of the hydraulic pressure in the decreasing direction and the increasing direction. Thus, a limit value of the solenoid command value that will not include the non-operating zone in the control region can be detected accurately. As a result, the lower limit value of the hydraulic pressure can be lowered as much as possible in spite of the product variation of the pressure reducing valve 33 (solenoid valve) and the fuel economy can be improved.

Since the first determining section and the second determining section each use a different method to determine if the solenoid command value is in the non-operating zone of the pressure reducing valve 33 (solenoid valve), the determination can be made more accurately than if only one method is used. Furthermore, if a hydraulic pressure feedback system having an integral value is used, the determination as to whether or not the solenoid command value is in the non-operating zone can be made using the integral member. As a result, the embodiment can be easily incorporated into an existing control scheme.

Since the first and second determining sections are executed when the vehicle is stopped and the automatic transmission is not transmitting power. Consequently, since the determinations are made when the hydraulic system is certainly stable, incorrect determinations can be prevented and the limit value of the solenoid command value can be detected more reliably.

### GENERAL INTERPRETATION OF TERMS

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. The term "configured" as used herein to describe a component, section or part of a device includes hardware and/or software that is constructed and/or programmed to carry out the desired function. The terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. For example, although a belt type continuously variable transmission is illustrated, the hydraulic pressure control apparatus can also be applied to other types of automatic transmission. Thus, the foregoing descriptions of the embodiments according to the present invention are provided for illustration only, and not for the purpose of limiting the invention as defined by the appended claims and their equivalents.

## Claims

1. An automatic transmission hydraulic pressure control apparatus comprising:
a first determining section configured to execute a first determination of whether a solenoid command value for a solenoid valve of a hydraulic circuit of an automatic transmission is in a non-operating zone of the solenoid valve after changing the solenoid command value by a first prescribed value in a step-like manner in a direction corresponding to a decrease in an actual hydraulic pressure of the hydraulic circuit, with the first determination being based on a tracking characteristic of the actual hydraulic pressure versus the solenoid command value during a first prescribed amount of time;
a second determining section configured to execute a second determination of whether the solenoid command value is in the non-operating zone after changing the solenoid command value by a second prescribed value in a step-like manner in a direction corresponding to an increase in the actual hydraulic pressure, the second prescribed value being smaller than the first prescribed value, with the second determination being based on a response characteristic of the actual hydraulic pressure versus the solenoid command value during a second prescribed amount of time; and
a limit value setting section configured to alternately control execution of the first and second determining sections and to set the solenoid command value of an immediately previous cycle in which the first determining section determined that the solenoid command value was not in the non-operating zone as a solenoid command limit value when one of the first and second determining sections has determined that the solenoid command value is in the non-operating zone.

2. The automatic transmission hydraulic pressure control apparatus as recited in claim 1, wherein
the limit value setting section is configured to set the solenoid command limit value when both of the first and second determining sections have determined in succession that the solenoid command value is in the non-operating zone.

3. The automatic transmission hydraulic pressure control apparatus as recited in claim 1, wherein
the first determining section is further configured to obtain an integral value by integrating a difference between the solenoid command value and the actual hydraulic pressure across the first prescribed amount of time as the tracking characteristic, and to determine that the solenoid command value is in the non-operating zone when the integral value is larger than a first threshold value; and
the second determining section is further configured to obtain the actual hydraulic pressure existing at a point in time when the second prescribed amount of time elapses as the response characteristic, and to determine that the solenoid command value is in the non-operating zone when the actual hydraulic pressure occurring immediately after the second prescribed amount of time has elapsed is smaller than a second threshold value that is smaller than a current solenoid command value by a prescribed amount.

4. The automatic transmission hydraulic pressure control apparatus as recited in claim 1, wherein
the first and second determining sections are configured to execute the first and second determinations when a vehicle equipped with the automatic transmission hydraulic pressure control apparatus is stopped and the automatic transmission is not transmitting power.

5. The automatic transmission hydraulic pressure control apparatus as recited in claim 2, wherein
the first determining section is further configured to obtain an integral value by integrating a difference between the solenoid command value and the actual hydraulic pressure across the first prescribed amount of time as the tracking characteristic, and to determine that the solenoid command value is in the non-operating zone when the integral value is larger than a first threshold value; and
the second determining section is further configured to obtain the actual hydraulic pressure existing at a point in time when the second prescribed amount of time elapses as the response characteristic, and to determine that the solenoid command value is in the non-operating zone when the actual hydraulic pressure occurring immediately after the second prescribed amount of time has elapsed is smaller than a second threshold value that is smaller than a current solenoid command value by a prescribed amount.

6. The automatic transmission hydraulic pressure control apparatus as recited in claim 2, wherein
the first and second determining sections are configured to execute the first and second determinations when a vehicle equipped with the automatic transmission hydraulic pressure control apparatus is stopped and the automatic transmission is not transmitting power.

7. The automatic transmission hydraulic pressure control apparatus as recited in claim 3, wherein
the first and second determining sections are configured to execute the first and second determinations when a vehicle equipped with the automatic transmission hydraulic pressure control apparatus is stopped and the automatic transmission is not transmitting power.

8. An automatic transmission hydraulic pressure control method comprising:
performing a tracking characteristic based determination of whether a solenoid command value for a solenoid valve of a hydraulic circuit of an automatic transmission is in a non-operating zone of the solenoid valve after changing the solenoid command value by a first prescribed value in a step-like manner in a direction corresponding to a decrease in an actual hydraulic pressure of the hydraulic circuit, with the tracking characteristic based determination being based on a tracking characteristic of the actual hydraulic pressure versus the solenoid command value during a first prescribed amount of time;
performing a response characteristic based determination of whether the solenoid command value is in the non-operating zone after changing the solenoid command value by a second prescribed value in a step-like manner in a direction corresponding to an increase in the actual hydraulic pressure, the second prescribed value being smaller than the first prescribed value, with the response characteristic based determination being based on a response characteristic of the actual hydraulic pressure versus the solenoid command value during a second prescribed amount of time;
alternately performing the tracking characteristic based determination and the response characteristic based determination; and
setting the solenoid command value of an immediately previous cycle in which the solenoid command value was determined not in the non-operating zone based on the tracking characteristic as a solenoid command limit value when one of the tracking characteristic based determination and the response characteristic based determination has determined that the solenoid command value is in the non-operating zone.

9. The automatic transmission hydraulic pressure control method as recited in claim 8, wherein
the setting of the solenoid command value occurs when both of the tracking characteristic based determination and the response characteristic based determination have determined that the solenoid command value is in the non-operating zone.
